# EUROPEAN PATENT APPLICATION

(11) **EP 1 936 991 A2**
(43) Date of publication of application: **25.06.2008**
(21) Application number: 07123025.4
(22) Date of filing: 12.12.2007
(51) Int. Cl.: H04N 7/24

(54) **System for providing broadcasting content information and method for providing broadcasting service in the system**

(30) Priority: 12.12.2006 KR 20060126560; 04.05.2007 KR 20070043783
(71) Applicant: Samsung Electronics Co., Ltd., Suwon-si, Gyeonggi-do (KR)
(72) Inventor: Jang, Byung-Wook, Gyeonggi-do (KR); Park, Jung-Hun, Gyeonggi-do (KR); Park, Ji-Ho, Gyeonggi-do (KR)
(74) Representative: Grünecker, Kinkeldey, Stockmair & Schwanhäusser Anwaltssozietät

(57) **Abstract**

A system and method for providing information about currently broadcast content at a broadcasting server. A multimedia broadcasting system includes a broadcasting server for broadcasting a packet including a broadcasting content ID corresponding to currently broadcast broadcasting content for each broadcasting channel and a broadcasting reception terminal for receiving a packet through a broadcasting channel upon selection of the broadcasting channel and checking content information corresponding to a content ID included in the received packet using previously stored broadcasting schedule information in order to check received broadcasting content.

## Description

The present invention generally relates to a system and method for providing a broadcasting service, and in particular, to a system and method for providing broadcasting content information in order for a broadcasting server to provide accurate information about currently broadcast broadcasting content.

Generally, broadcasting services are provided to users through common home televisions (TVs) and portable terminals. The number of users receiving broadcasting services through the portable terminals has been experiencing dramatic increases. A mobile TV service is an example of a broadcasting service provided through a portable terminal, and typically conforms to various standards including, for example, Digital Multimedia Broadcasting (DMB), Digital Video Broadcasting-Handheld (DVB-H), Open Mobile Alliance BroadCAST (OMA-BCAST), etc. A mobile TV service is normally provided to users through test broadcasting or regular broadcasting based on such a standard in Europe and the Americas as well as in South Korea. A mobile TV service including an existing digital TV service has recently been providing a new type of service called a data service in addition to video/audio services provided in existing broadcasting.

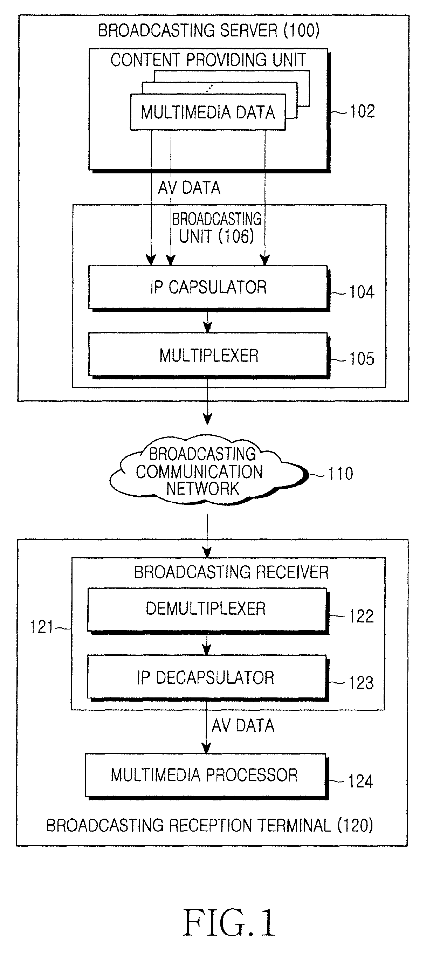

A conventional DVB-H system for providing a broadcasting service will now be described with reference to FIG. 1.

In FIG. 1, a content providing unit 102 is managed by a content provider and generates various broadcasting contents to be broadcast by a DVB-H broadcasting station. Content, as used herein, refers to a basic broadcasting unit distinguished by time according to a broadcasting schedule table that may be composed using an Electronic Service Guide (ESG) or an Electronic Program Guide (EPG). When multimedia data is provided from the content providing unit 102, a common carrier broadcasts input data through a broadcasting unit 106 according to a broadcasting method after packetizing and multiplexing the input data. In other words, the broadcasting unit 106 packetizes the transmission multimedia data through an Internet Protocol (IP) capsulator 104, multiplexes the packetized multimedia data through a multiplexer 105, and then broadcasts the multiplexed multimedia data through a broadcasting communication network 110.

When the multiplexed multimedia data is broadcast from the broadcasting server 100, a broadcasting reception terminal 120 of a user receives the broadcast multimedia data through a broadcasting receiver 121. The received multimedia data is demultiplexed and decapsulated by a demultiplexer 122 and an IP decapsulator 123 included in the broadcasting receiver 121, thereby being reconstructed to the original multimedia data. The reconstructed multimedia data is then output to a multimedia processor 124 of the broadcasting reception terminal 120 in order to be processed so that broadcasting corresponding to a channel selected by the user can be output.

In a system that provides a broadcasting service, a broadcasting server transmits broadcasting service information, such as a service type and details provided in each channel and reception information used to receive a broadcasting service, to the broadcasting reception terminal 120. The broadcasting service information may be an Electronic Program Guide (EPG) in the case of DMB and an Electronic Service Guide (ESG) in the case of DVB-H.

The broadcasting reception terminal 120 receiving the broadcasting service information stores the broadcasting service information in advance. Once a predetermined broadcasting channel is selected for a broadcasting service, the broadcasting reception terminal 120 receives broadcasting content through the selected broadcasting channel by referring to previously stored broadcasting service information and provides the broadcasting content. In other words, when a broadcasting service is provided, broadcasting content to be provided can be identified according to previously received broadcasting service information.

Meanwhile, broadcasting content that is currently broadcast through a selected broadcasting channel and broadcasting content that is scheduled to be broadcast at the current point of time according to previously received broadcasting service information may be different from each other. In this case, at a request for viewing broadcasting content information that is currently broadcast through a user selected broadcasting channel, the broadcasting reception terminal 120 checks broadcasting content information regarding the selected broadcasting channel from the previously received broadcasting service information and provides the broadcasting content information. Thus, the user may be provided with broadcasting content information that is different from broadcasting content information that is currently broadcast through the selected broadcasting channel.

For example, consider assuming that drama A is scheduled to be broadcast from 8:00 pm, to 9:00 pm on a first channel and drama B is scheduled to be broadcast from 9:00 pm to 10:00 pm on the first channel according to the previously received broadcasting service information, but the schedule of the drama A is changed due to some broadcasting delay of the broadcasting server 100 so the drama A is to be broadcast until 9:10 pm and the drama B is to be broadcast from 9:10 pm to 10:10 pm.

If the user confirms that the drama B is scheduled to start at 9:00 pm on the first channel by checking the previously received broadcasting service information and thus selects the first channel to watch the drama B, the user can watch the drama A instead of the drama B and broadcasting service information provided is also information about the drama A instead of information about the drama B desired by the user. Since the drama B is provided as the broadcasting content information even if broadcasting content that is currently broadcast on the first channel is the drama A, the user cannot be provided with accurate information about currently broadcast content.

If the user sets reserved recording with respect to content to be broadcast from 9:00 pm to 10:00 pm on the first channel for reserved recording of the drama B, the broadcasting receiving terminal 120 starts recording content that is broadcast on the first channel at 9:00 pm and terminates recording at 10:00 pm. However, since the drama A, instead of the drama B, is broadcast at 9:00 pm on the first channel and the drama B actually starts from 9:10 pm, a portion of the drama A is also recorded. Moreover, a portion of the drama B corresponding to last 10 minutes cannot be recorded because recording is terminated at 10:00 pm.

A Conditional Access System (CAS) for providing a charged service assigns a unique right identifier (ID) to multimedia content for a scrambled channel in order to identify the multimedia content. Although a terminal having the CAS can identify multimedia content, a server providing the multimedia content has to include a scrambling module and the terminal has to include a descrambling module. Moreover, heavy load is caused in the terminal due to a large amount of computation required for descrambling.

As discussed above, conventionally, a user checks information about broadcast content according to previously provided broadcasting service information and sets reserved recording with respect to desired content by referring to previously provided broadcasting service information, without identifying actually broadcast content.

Consequently, if previously provided information regarding broadcasting content is different from actually broadcast content, the user may be provided with wrong information instead of correct information about the actually broadcast content. Moreover, in reserved recording, the user may also record undesired content in addition to desired content, resulting in a waste of memory and power and even a failure to record the desired content.

Although the CAS can identify contents, in order for a terminal having a CAS to identify multimedia content, a server has to include a scrambling module and the terminal has to include a descrambling module. Moreover, heavy load is caused in the terminal due to a large amount of computation used for descrambling. Therefore, a need exists for providing broadcasting content information, in which accurate information about currently broadcast broadcasting content can be provided.

The present invention addresses at least the above problems and/or disadvantages and provides at least the advantages described below. Accordingly, the object of the present invention is to provide a system and method for providing broadcasting content information, in which accurate information about currently broadcast broadcasting content can be provided.

This object is solved by the subject matter of the independent claims.

Preferred embodiments are defined in the dependent claims.

An aspect of the present invention is to provide a system and method for providing broadcasting content information, in which information about currently broadcast broadcasting content is transmitted with a small amount of data and a broadcasting reception terminal can identify broadcasting content with a small amount of computation.

According to an aspect of the present invention, there is provided a multimedia broadcasting system including a broadcasting server for broadcasting a packet including a broadcasting content ID corresponding to currently broadcast broadcasting content for each broadcasting channel and a broadcasting reception terminal for receiving a packet through a broadcasting channel upon selection of the broadcasting channel and checking content information corresponding to a content ID included in the received packet using previously stored broadcasting schedule information in order to check received broadcasting content.

According to still another aspect of the present invention, there is provided a method for providing broadcasting content information in a multimedia broadcasting system including a broadcasting server and a digital broadcasting reception terminal. The method includes a first step of the broadcasting server broadcasting a packet including a broadcasting content ID corresponding to currently broadcast broadcasting content for each broadcasting channel, a second step of the digital broadcasting reception terminal receiving a packet through a broadcasting channel upon selection of the broadcasting channel, and a third step of the digital broadcasting reception terminal checking content information corresponding to a content ID included in the received packet using previously stored broadcasting schedule information in order to check received broadcasting content.

According to yet another aspect of the present invention, there is provided a multimedia broadcasting system including a broadcasting server for broadcasting a broadcasting a packet including content ID corresponding to currently broadcast broadcasting content for each broadcasting channel and a digital broadcasting reception terminal for, upon selection of broadcasting content for reserved recording, starting packet reception through a broadcasting channel through which the selected broadcasting content is broadcast at a point of time preceding a broadcasting start time of the selected broadcasting content by preset content search time, checking whether a content ID included in a received packet is identical to a content ID corresponding to reserved-recording set broadcasting content, and recording multimedia data of only a received packet including the same content ID as the content ID corresponding to the reserved-recording set broadcasting content.

According to still another aspect of the present invention, there is provided a method for reserved-recording broadcasting content by a digital broadcasting reception terminal in a multimedia broadcasting system including a broadcasting server and the digital broadcasting reception terminal. In the method, the broadcasting server broadcasts a packet including a broadcasting content ID corresponding to currently broadcast broadcasting content for each broadcasting channel, the digital broadcasting reception terminal, upon selection of broadcasting content for reserved recording, starts packet reception through a broadcasting channel through which the selected broadcasting content is broadcast at a point of time preceding a broadcasting start time of the selected broadcasting content by a preset content search time, and the digital broadcasting reception terminal analyzes a content ID included in a received packet and recording multimedia data of only a received packet including the same content ID as a content ID corresponding to reserved-recording set broadcasting content.

The above and other features and advantages of the present invention will be more apparent from the following detailed description taken in conjunction with the accompanying drawings, in which:
FIG. 1 is a block diagram of a DVB-H system for providing a broadcasting service according to the prior art;
FIG. 2 is a block diagram of a system for providing broadcasting content information regarding currently broadcast broadcasting content according to the present invention;
FIG. 3 is a block diagram of a broadcasting reception terminal that checks information about currently broadcast broadcasting content according to the present invention;
FIG. 4 illustrates a content information packet format according to the present invention;
FIG. 5 is a flowchart of a process in which a broadcasting server provides broadcasting content information regarding currently broadcast broadcasting content according to the present invention;
FIG. 6 is a flowchart of a process in which a broadcasting reception terminal receives information about currently broadcast broadcasting content and checks broadcasting content information according to a first embodiment of the present invention; and
FIGs. 7A and 7B are flowcharts of a process in which a broadcasting reception terminal checks information about currently broadcast broadcasting content and records reserved-recording set broadcasting content according to a second embodiment of the present invention.

Throughout the drawings, the same drawing reference numerals will be understood to refer to the same elements, features and structures.

The matters defined in the description such as a detailed construction and elements are provided to assist in a comprehensive understanding of an exemplary embodiment of the invention. Accordingly, those of ordinary skill in the art will recognize that various changes and modifications of the embodiment described herein can be made without departing from the scope and spirit of the invention. Also, descriptions of well-known functions and constructions are omitted for clarity and conciseness.

The present invention provides a scheme in which a broadcasting server provides information about currently broadcast broadcasting content to a broadcasting reception terminal. To this end, the present invention provides two schemes for transmitting broadcasting content information. A first scheme provides a broadcasting content ID using an Internet Protocol (IP) packet in addition to a multimedia packet, and a second scheme provides a broadcasting content ID using a Real-Time transport Protocol (RTP) packet during transmission of a multimedia packet. In the present invention, a Digital Video Broadcasting-Handheld (DVB-H) system will be taken as an example of broadcasting systems. However, the present invention may also be applied to other systems including, for example, a Digital Multimedia Broadcasting (DVB) system, an Open Mobile Alliance BroadCAST (OMA-BCAST) system, or the like.

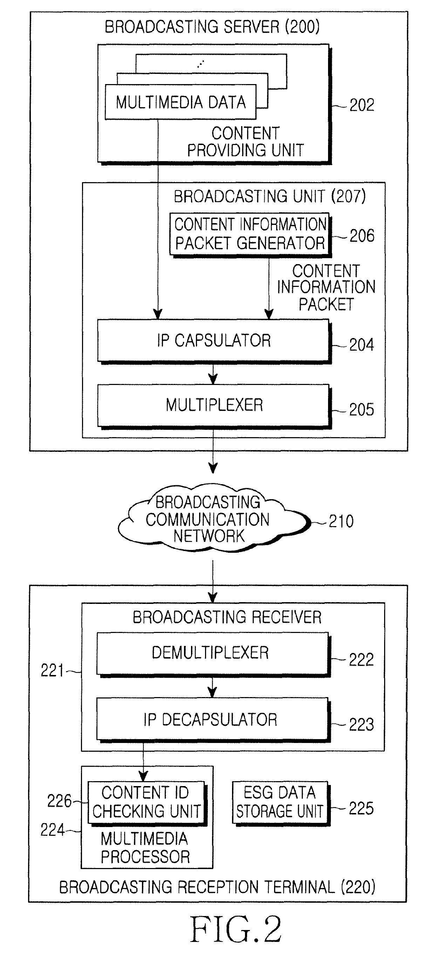

A system for providing broadcasting content information regarding currently broadcast broadcasting content using the first scheme will be described with reference to FIG. 2.

Referring to FIG. 2, a broadcasting server 200 for broadcasting multimedia data may include a content providing unit 202 and a broadcasting unit 207. The content providing unit 202 is managed by a content provider and generates various broadcasting contents broadcast by the broadcasting server 200. The broadcasting unit 207 is managed by a common carrier, and packetizes and multiplexes broadcasting content generated by the content providing unit 202 and broadcasts the broadcasting content as a Radio Frequency (RF) signal. The content provider is an operator in charge of generating various broadcasting contents, and the common carrier is an operator in charge of servicing the broadcasting contents to users through a particular communication line leased frequency.

Data provided from the content providing unit 202 may include program data of a broadcasting channel, i.e., AudioNideo (AV) data, and an Electronic Service Guide (ESG). The AV data indicates multimedia data for reproducing broadcasting content provided from the content providing unit 202 in the form of an audio signal and a video signal at a reception terminal.

Once multimedia data is provided from the content providing unit 202, the common carrier packetizes and multiplexes the input multimedia data according to a broadcasting method and broadcasts the multimedia data through the broadcasting unit 207. Thus, the broadcasting unit 207 includes an IP capsulator 204 and a multiplexer 205 for packetizing and multiplexing broadcasting data. In particular, the broadcasting unit 207 according to the present invention includes a content information packet generator 206 for generating a content information packet including a content ID for each broadcasting content broadcast during transmission of time-divisionally provided multimedia data and outputting the generated content information packet to the IP capsulator 204. The IP capsulator 204 then performs IP capsulation on the multimedia data and the content information packet according to a broadcasting method of a DVB-H system, i.e., Internet Protocol Data Casting (IPDC), and the multiplexer 205 then performs multiplexing.

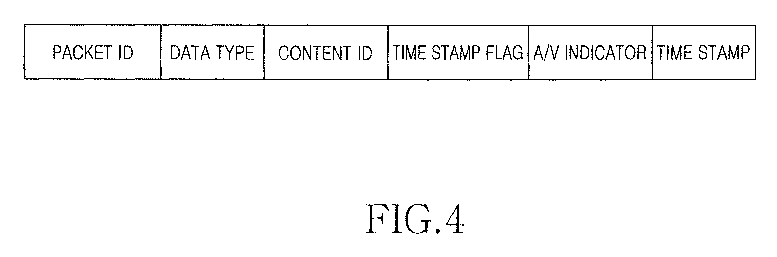

The broadcasting server 200 using the first scheme according to the present invention broadcasts a packet including a broadcasting content identifier (ID) corresponding to currently broadcast broadcasting content for each broadcasting channel. The content information packet transmitted from the broadcasting server 200 is transmitted separately from a multimedia packet for providing broadcasting content for each broadcasting channel. The separately transmitted content information packet may have a format as shown in FIG. 4. In FIG. 4, the content information packet includes a packet ID field, a data type field, a content ID field, a time stamp flag field, an audio visual (A/V) indicator field, and a time stamp field. The packet ID field has a unique value indicating that a current packet has a format including a content ID. The data type field has a value indicating the data type of the content ID. The content ID field has a unique ID of content and is the same as a content ID corresponding to broadcasting schedule information. The time stamp flag field has a value indicating whether to transmit a time stamp. The A/V indicator field has a value indicating whether a criterion of the time stamp is audio, video, or data. The time stamp field has a time stamp value that is calculated by applying the same criterion as used for a multimedia Real-Time Transport Protocol (RTP) packet.

In a content information packet, such as the packet shown in FIG. 4, the criterion of the time stamp differs according to which media type is included in the A/V indicator field. One of media types included in currently broadcast broadcasting content is indicated in the A/V indicator field and the time stamp may be expressed based on the media. A time interval at which the broadcasting server 200 transmits the content information packet is not directly related to an AN sampling rate or a frame rate. As the interval become shorter, a resolution for identifying content is improved, but load to a system may become larger. Considering this, an appropriate interval may be selected. For a system in which a large packet transmission delay does not occur, or a broadcasting service that does not need detailed content identification, time stamp information may be omitted. In this case, a packet including a content ID suggested in the present invention and an AN packet that is received at the nearest time to the reception of the packet are assumed to be temporally synchronized with each other.

The broadcasting server 200 transmits reception information about a new session for broadcasting a packet including a content ID for a broadcasting channel through a Session Description Protocol (SDP) of an ESG during transmission of the ESG. In the present invention, an MIME type for broadcasting the content information packet, such as, for example, "m=<media> <port>/<number of ports> <transport> <fmt list>", may be added to the SDP. For"<media type>", an MIME media type may be newly added or a data type may be used. "<port>" indicates a transport port and "<number of ports>" indicates the number of ports. Since the number of ports is 1, "<number of ports>" may be omitted. "<transport>" is a transport protocol and may use a User Datagram Protocol (UDP). "<fmt list>" defines a new MIME type for the format of a content ID packet. A parameter used for the format may be expressed using attribute.

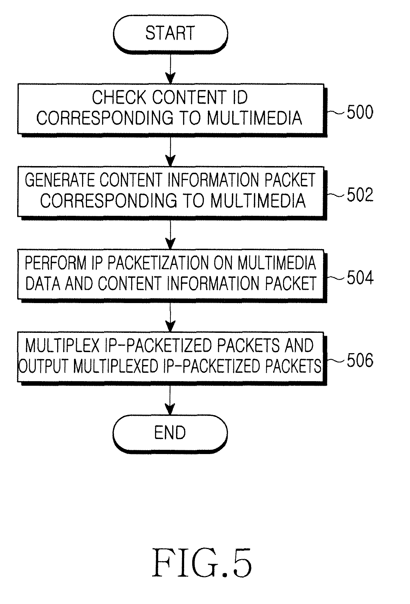

A process in which the broadcasting server 200 provides broadcasting content information regarding currently broadcast broadcasting content will now be described with reference to FIG. 5.

In step 500, the broadcasting server 200 checks a content ID for currently broadcast multimedia. In step 502, the broadcasting server 200 then generates a content information packet including a content ID corresponding to each broadcasting content transmitted during transmission of time-divisionally provided multimedia data and a time stamp through the content information packet generator 206. The broadcasting sever 200 then performs IP packetization on the generated content information packet and multimedia data through the IP capsulator 204 in step 504. In step 506, the broadcasting server 200 multiplexes the IP packetized packets through the multiplexer 205

The broadcasting reception terminal 220 receiving the provided content information will be described by referring back to FIG. 2.

When the broadcasting server 200 broadcasts the multiplexed multimedia data over a broadcasting communication network 210, the broadcasting reception terminal 220 receives the multimedia data through a broadcasting receiver 221. A demultiplexer 222 and an IP decapsulator 223 included in the broadcasting receiver 221 demultiplex and decapsulate the received data, thereby reconstructing the original multimedia data. The multimedia data is output to a multimedia processor 224 of the broadcasting reception terminal 220 in order to output broadcasting corresponding to a user selected channel. A content ID check unit 226 of the multimedia processor 224 checks a content ID included in a content information packet output from the IP decapsulator 223. When a time stamp is transmitted through a packet suggested in the present invention, the transmitted time stamp is compared with a time stamp transmitted through an AN RTP packet in order to determine to which content received AN data corresponds. Content information corresponding to a content ID included in the received packet is checked by referring to a previously stored ESG when a check of content information is necessary. In order to check currently broadcast content information, the broadcasting reception terminal 220 checks a broadcasting schedule table that can be composed based on ESG information stored in an ESG data storage unit 225 and checks content information corresponding to a content ID included in the checked broadcasting schedule table.

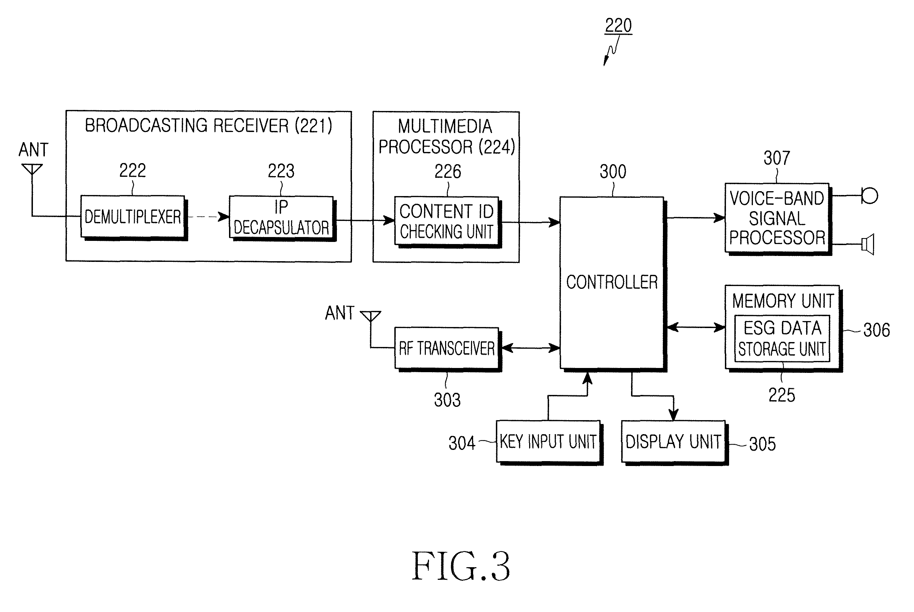

The broadcasting reception terminal 220 for receiving content information from the broadcasting server 200 and checking information about currently broadcast broadcasting content will now be described with reference to FIG. 3.

The broadcasting reception terminal 220 according to the present invention includes the broadcasting receiver 221, the multimedia processor 224, a RF transceiver 303, a key input unit 304, a display unit 305, a memory unit 306, a voice-band signal processor 307, and a controller 300.

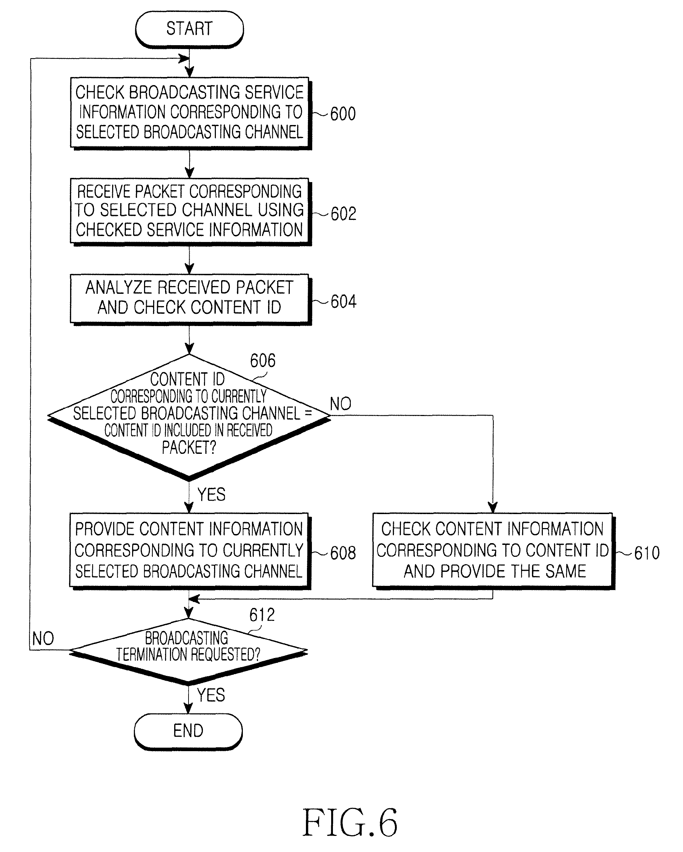

The controller 300 performs overall control of a general terminal, processes an audio signal and data according to a protocol for wireless Internet connection and digital broadcasting, and controls components of the broadcasting reception terminal 200. In particular, the controller 300 according to the present invention receives a packet provided through a broadcasting channel selected by the user, checks a content ID included in the received packet, and then checks content information corresponding to the checked content ID using a previously stored broadcasting schedule table in order to check information about received broadcasting content. The control operation of the controller 300 in order to provide accurate information about currently broadcast broadcasting content will be described later with reference to FIG. 6.

If a user sets reserved recording for broadcasting content to be provided at a particular point of time, the controller 300 controls a reserved recording operation. The controller 300 starts packet reception on a broadcasting channel through which selected broadcasting content is broadcast through the broadcasting receiver 221 at a point of time preceding the broadcasting start time of the selected broadcasting content by preset content search time. The controller 300 also checks whether a content ID included in the received packet is identical to a content ID corresponding to reserved-recording set broadcasting content.

For example, if a user sets reserved recording for the drama A that is to be provided from 9:00 pm to 10:00 pm on a first channel and sets content search time to 10 minutes, the controller 300 checks a content ID corresponding to the drama A and checks a content ID included in a packet received from 8:50 pm. If the same content ID as that corresponding to the drama A is confirmed during the check, the controller 300 controls to start recording the received packet.

When a content ID included in a packet received during recording is different from that corresponding to the reserved-recording set drama A, the controller 300 controls to pause recording for preset recording pause maximum time and check a content ID included in a received packet.

Upon receipt of a packet including the same content ID as that corresponding to the reserved-recording set drama A for the preset recording pause maximum time, the controller 300 controls to continue recording. However, if a packet including the same content ID as that corresponding to the reserved-recording set drama A is not received for the preset recording pause maximum time, the controller 300 controls to terminate recording.

The controller 300 checks a content ID included in a received packet by applying power to the broadcasting receiver 221 at preset search intervals in a recording pause state or prior to a recording start point of time.

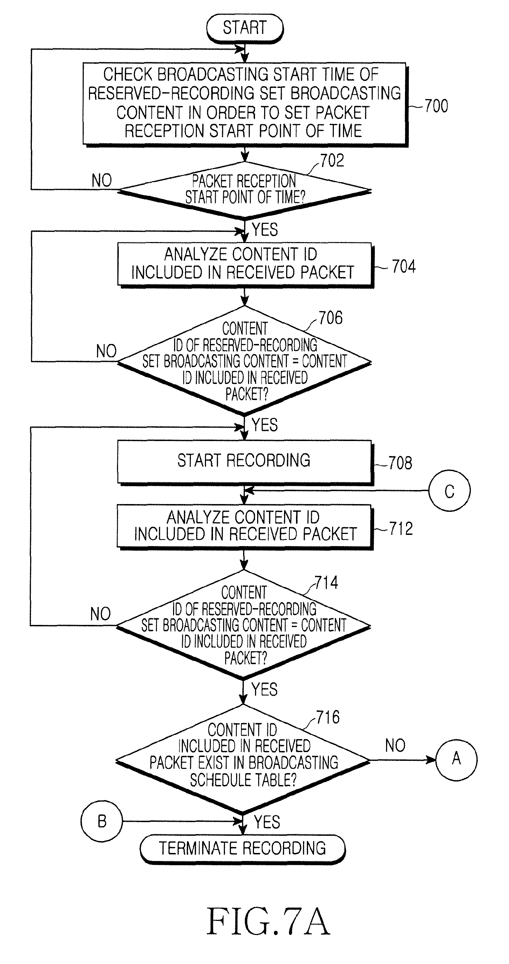

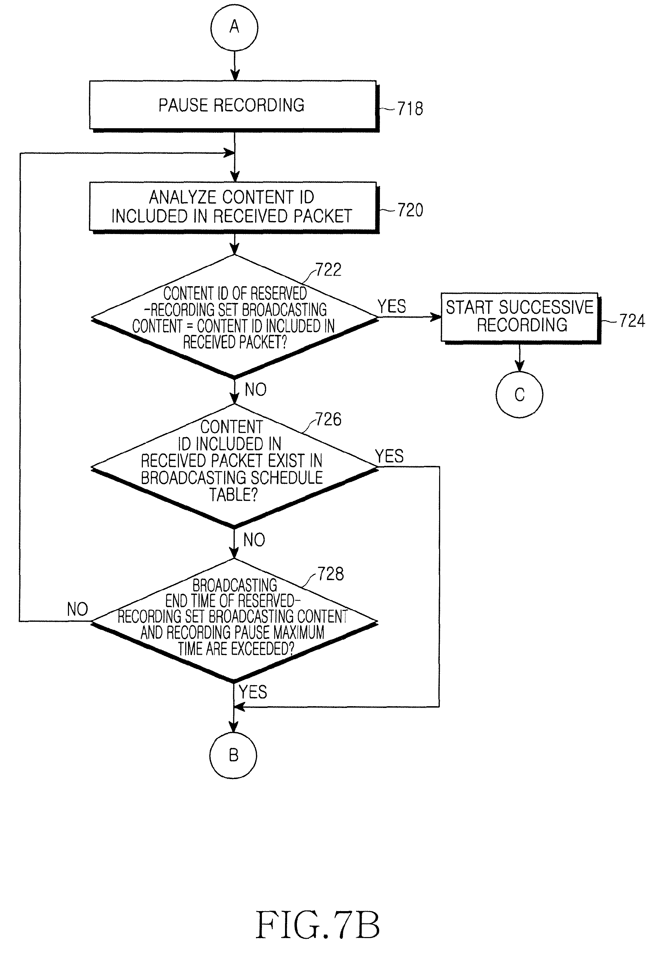

The detailed control operation of the controller 300 for checking a content ID included in a received packet in order to check whether the received packet belongs to reserved-recording set broadcasting content according to the present invention will be described later with reference to FIGs. 7A and 7B.

The broadcasting receiver 221 includes the demultiplexer 222 for demultiplexing a broadcasting packet including multimedia data into a multimedia packet and a content information packet and the IP decapsulator 223 for decapsulating the demultiplexed packets. The RF transceiver 303 performs data processing for wireless communication with a base station. The key input unit 304 includes various keys including numeric keys and provides a key input signal input from the user to the controller 300. The display unit 305 displays messages under the control of the controller 300. The display unit 305 may include a Liquid Crystal Display (LCD), a Thin Film Transistor (TFT), and an organic Electroluminescence (EL).

The multimedia processor 224 checks reception information regarding a broadcasting channel selected by the user from the ESG data storage unit 225 and outputs the multimedia data of the broadcasting packet transmitted through the selected broadcasting channel according to the checked reception information. In particular, the multimedia processor 224 according to the present invention includes the content ID check unit 226 for checking a content ID included in a packet output from the IP decapsulator 223. If the received broadcasting packet includes a multimedia RTP packet and a content information packet, content information is checked from a content ID field included in the content information packet. Content information corresponding to a content ID included in a received packet is checked, when a check of content information is necessary, with reference to a broadcasting schedule table that can be composed using an ESG that is previously stored in the ESG data storage unit 225.

The memory unit 306 may include a Read Only Memory (ROM), a flash memory, and a Random Access Memory (RAM). The ROM stores a program for processing and controlling operations of the controller 300 and reference data. The RAM provides a working memory of the controller 300. The flash memory provides an area for storing updatable retention data. The memory unit 206 also includes ESG data storage unit 225 which can previously store information about sub services for a main service checked by parsing ESG data by the controller 300. A time table such as a broadcasting schedule table including information about broadcasting content provided for each broadcasting channel in units of time, which is generated by the controller 300, may be stored. In the present invention, information about broadcasting content includes a broadcasting content ID in addition to general information about broadcasting content. By previously storing a parsing result, broadcasting corresponding to a channel can be output, upon selection of a broadcasting service corresponding to the channel, using stored information, thereby shortening time to provide the broadcasting service.

The memory unit 306 stores content search time indicating how much earlier or later than a start time of reserved recording set broadcasting content broadcasting packet reception is to start in order to record the selected broadcasting content. A start time of the selected broadcasting content is provided in a broadcasting schedule table. The memory unit 306 also stores a recording pause maximum time for pausing recording when a content ID included in a packet received during recording is different from a content ID corresponding to the reserved-recording set broadcasting content. The memory unit 306 also stores a search interval at which a content ID included in a received packet is checked in recording pause state or prior to the recording start point of time.

The voice-band signal processor 307 is connected with a microphone MIC and a speaker SPK, converts a voice-band signal received through the microphone MIC into data and outputs the data to the controller 300 upon call connection, and converts voice-band data input from the controller 300 into an audible sound.

A process for checking content information regarding currently received broadcasting content at the broadcasting reception terminal 220 will now be described with reference to FIG. 6.

The controller 300 of the broadcasting reception terminal 220 receives an ESG transmitted from the broadcasting server 200 and stores the received ESG in the ESG data storage unit 225.

The controller 300 checks broadcasting service information regarding a broadcasting channel selected by the user or by a reserved recording function through the ESG in step 600. The controller 300 then receives a packet corresponding to the selected broadcasting channel using the checked broadcasting service information in step 602. At this time, the broadcasting reception terminal 220 checks reception information for receiving content information corresponding to the selected broadcasting channel through a Session Description Protocol (SDP) and then receives a content information packet using the checked reception information. The broadcasting reception terminal 220 also checks reception information for receiving multimedia data corresponding to the selected broadcasting channel and receives a multimedia data packet using the checked reception information.

The controller 300 then checks a content ID corresponding to currently broadcast broadcasting content from the content information packet in step 604. In step 606, the controller 300 checks a content ID corresponding to the currently selected broadcasting channel using the stored ESG and checks whether the checked content ID is identical to the content ID included in the received content information packet in step 606. If so, the controller 300 goes to step 608 in order to provide content information corresponding to the currently selected broadcasting channel

If the checked content ID is not the same as the content ID included in the received content information packet, the controller 300 goes to step 610 in order to check content information corresponding to the content ID included in the received content information packet using the ESG and then provide the checked content information.

In step 612, the controller 300 stops operation when broadcasting termination is requested or, otherwise, the controller 300 goes to step 600.

The second scheme that provides a broadcasting content ID through a multimedia packet will now be described. The multimedia packet is then transmitted as an RTP packet and a content ID has to be added to an RTP payload in order to transmit the broadcasting content ID through the RTP packet. The broadcasting reception terminal 220 has to be able to recognize an RTP payload type for the previously agreed content ID, and analyzes the content ID included in the RTP payload in order to check whether multimedia data is included and in which content.

As discussed above, in the present invention, the broadcasting reception terminal 220 can determine to which content received multimedia data corresponds using a content ID included in a received broadcasting packet.

A description will now be made regarding a process in which the broadcasting reception terminal 220 checks information about currently broadcast broadcasting content and records reserved-recording set broadcasting content according to a second example of the present invention with reference to FIGs. 7A and 7B. For recording reservation, a user has to preset content information for reserved recording, content search time, recording pause maximum time, and a search interval.

Referring to FIG. 7A, in step 700, the controller 300 checks the broadcasting start time of broadcasting content that is reserved-recording set by the user from a broadcasting schedule table stored in the ESG data storage unit 225. The controller 300 then sets a point of time preceding the checked broadcasting start time by the preset content search time as a packet reception start point of time. For example, the packet reception start point of time is 8:50 pm when the selected broadcasting content is scheduled to start at 9:00 pm and the content search time is preset to 10 minutes.

In step 702, the controller 300 checks if the current point of time is the same as the packet reception start point of time that has been set in step 701. Herein, the current point of time means system time. For example, in step 702, the controller 300 checks if the system time is PM 8:50.

When the checked current point of time is the same as the packet reception start point of time in step 702, the controller 300 goes to step 704. Otherwise, the controller 300 goes to step 702 in order to wait until the packet reception start point of time.

When the controller 300 goes to step 704 from step 702, the controller 300 receives a packet broadcast on a reserved-recording set broadcasting channel through the broadcasting receiver 221 and analyzes a content ID included in the received packet. In step 706, the controller 300 checks whether a content ID corresponding to the reserved-recording set broadcasting content is identical to the analyzed content ID. In other words, the controller 300 determines whether multimedia data included in the received packet is reserved-recording set multimedia data.

When the content ID corresponding to the selected broadcasting content is identical to the analyzed content ID in step 706, the controller 300 goes to step 708 in order to start recording. Otherwise, the controller 300 goes to step 704 in order to analyze a content ID included in a received packet for checking the identicalness between the content IDs. Recording, as used herein, refers to an operation of storing multimedia data of the received packet in the memory unit 306. Step 706 for checking whether the content ID corresponding to the reserved-recording set broadcasting content is identical to the content ID analyzed in step 704 may be performed at preset intervals, thereby reducing power for packet reception.

When the controller 300 performs recording in step 708, the controller 300 may analyze a content ID included in a received packet in step 712 and then check whether a content ID corresponding to reserved-recording set broadcasting content is identical to the analyzed content ID in step 714. In other words, the controller 300 continuously determines whether multimedia data included in a received packet is reserved-recording set multimedia data during recording.

When the content ID corresponding to the selected broadcasting content is identical to the analyzed content ID in step 714, the controller 300 goes to step 708 in order to continue recording. Otherwise, the controller 300 goes to step 716 in order to check if a content ID included in a received packet is a content ID corresponding to another broadcasting content in the broadcasting schedule table.

When the content ID included in the received packet exists in the broadcasting schedule table in step 716, the controller 300 terminates recording. In other words, if the same content ID as that included in the received packet exists in the broadcasting schedule table, the controller 300 determines that broadcasting of broadcasting content that is reserved-recording set by the user is terminated. In this case, the content ID included in the received packet may be a content ID corresponding to broadcasting content that is scheduled to be broadcast after currently recorded broadcasting content.

When the content ID included in the received packet does not exist in the broadcasting schedule table in step 716, the controller 300 goes to (A). A process after (A) will now be described with reference to FIG. 7B.

Referring to FIG. 7B, in step 718 to which the controller 300 goes because the content ID included in the received packet does not exist in the broadcasting schedule table, the controller 300 pauses recording. In other words, since content included in the currently received packet does not exist in the broadcasting schedule table and may be temporary broadcasting that is not scheduled to be broadcast, such as emergency broadcasting or advertisement broadcasting, the controller 300 pauses recording. When broadcasting that is not scheduled to be broadcast, such as emergency broadcasting or advertisement broadcasting, occurs during recording of the selected broadcasting content, the controller 300 pauses recording in the middle of the selected broadcasting content and then performs successive recording by resuming recording the selected broadcasting content successively from an end of the paused portion. By doing so, only multimedia data corresponding to broadcasting content that is reserved-recording set by the user can be recorded.

Thereafter, in a recording pause state, the controller 300 analyzes a content ID included in a received packet in step 720 and checks if the content ID corresponding to the reserved-recording set broadcasting content is identical to the analyzed content ID in step 722. In other words, in recording pause state, the controller 300 determines whether multimedia data included in the received packet is reserved-recording set multimedia data. The analysis of the content ID included in the received packet may be performed at preset intervals. In other words, in the present invention, the determination of whether received multimedia data is subject to reserved recording without actual recording of the received multimedia data may be performed at predetermined intervals instead of for every data in order to reduce power consumption of a terminal.

When the content ID corresponding to the reserved-recording set broadcasting content is identical to the analyzed content ID in step 722, the controller 300 proceeds to step 724 in order to perform successive recording by resuming recording the reserved-recording set broadcasting content successively from an end of the paused portion and then goes to (C) in order to proceed to step 712 of FIG. 7A.

However, when the content ID corresponding to the reserved-recording set broadcasting content is not identical to the analyzed content ID in step 722, the controller 300 goes to step 726 in order to check whether a content ID included in a received packet exists in the broadcasting schedule table

If so, the controller 300 goes to (B) in order to terminate recording. If not, the controller 300 goes to step 728 in order to check if the broadcasting end time of the reserved-recording set broadcasting content and recording pause maximum time are exceeded.

If so, the controller 300 proceeds to (B) in order to terminate recording. If not, the controller 300 goes to step 720. In other words, the broadcasting end time is exceeded according to the broadcasting schedule table, the controller 300 waits from this point of time until recording pause maximum time is exceeded. If multimedia data corresponding to the reserved-recording set broadcasting content is not received any more, the terminal 300 terminates recording without further receiving any data in order to reduce terminal's power consumption.

Although not shown in FIG. 7B, the controller 300 terminates recording in some situations. For example, the controller 300 can terminate recording when a maximum recording time is exceeded during a recording, when a user compulsorily terminates a recording, when a recording has to be terminated due to a state of a terminal, or when data reception is not smooth for a particular time due to a bad reception state. Moreover, reserved recording is desirably performed in a terminal in background.

As is apparent from the foregoing description, according to the present invention, accurate information regarding broadcasting content that is currently broadcast can be provided in a broadcasting reception terminal. Moreover, information about the currently broadcast broadcasting content can be transmitted with a small amount of data and the broadcasting reception terminal can identify broadcasting content with a small amount of computation.

Moreover, according to the present invention, a user can perform reserved recording only for desired broadcasting content using a technique for identifying broadcasting content, thereby improving user convenience and reducing power consumption of a terminal as well as saving memory because of not recording undesired content.

While the invention has been shown and described with reference to an exemplary embodiment thereof, it will be understood by those skilled in the art that various changes in form and details may be made therein without departing from the scope of the invention.

## Claims

1. A multimedia broadcasting system comprising:
a broadcasting server for broadcasting a packet including a broadcasting content ID corresponding to currently broadcast broadcasting content for each broadcasting channel; and
a broadcasting reception terminal for receiving a packet through a broadcasting channel upon selection of the broadcasting channel and
checking content information corresponding to a content ID included in the received packet using previously stored broadcasting schedule information in order to check received broadcasting content.

2. The multimedia broadcasting system of claim 1, wherein the broadcasting server is adapted to transmit the broadcasting content ID corresponding to the currently broadcast broadcasting content for each broadcasting channel through a packet that is different from a multimedia packet for providing broadcasting content for each broadcasting channel.

3. The multimedia broadcasting system of claim 1 or 2, wherein the broadcasting server is adapted to broadcast reception information regarding a new session for transmitting the packet, the reception information including the content ID corresponding to the broadcasting channel through an Electronic Service Guide, ESG.

4. The multimedia broadcasting system of claim 3, wherein the reception information regarding the new session for broadcasting the packet including the content ID corresponding to the broadcasting channel is transmitted through a Session Description Protocol, SDP, file of the ESG.

5. The multimedia broadcasting system of claim 4, wherein the digital broadcasting reception terminal is adapted to receive and store the ESG, to check the reception information for receiving the content information corresponding to the selected broadcasting channel through the SDP file, to receive the packet using the checked reception information, and to check the content ID included in the received packet.

6. The multimedia broadcasting system of claim 5, wherein the digital broadcasting reception terminal is further adapted to check a content ID corresponding to the broadcasting channel using the stored ESG, to check whether the checked content ID is identical to the content ID included in the received packet, and to provide the content information corresponding to the broadcasting channel.

7. The multimedia broadcasting system of claim 5, wherein the digital broadcasting reception terminal checks the content ID corresponding to the currently broadcasting channel using the stored ESG, checks if the checked content ID is identical to the content ID included in the received packet, checks the content information corresponding to the content ID included in the received packet using the ESG if the checked content ID is not the same as the content ID included in the received packet, and provides the checked content information.

8. The multimedia broadcasting system of claim 1, wherein the broadcasting server is adapted to transmit the broadcasting content ID corresponding to the broadcasting content for each broadcasting channel through a multimedia packet.

9. The multimedia broadcasting system of claim 8, wherein the digital broadcasting reception terminal is adapted to check the content ID corresponding to the broadcasting channel using a previously stored Electronic Service Guide, ESG, to check whether the checked content ID is identical to a content ID included in the received packet, and to provide the content information corresponding to the currently selected broadcasting channel when the checked content ID is identical to a content ID included in the received packet.

10. The multimedia broadcasting system of claim 8, wherein the digital broadcasting reception terminal is adapted to check the content ID corresponding to the broadcasting channel using a previously stored ESG, to check whether the checked content ID is identical to a content ID included in the received packet, to check content information corresponding to the content ID included in the received packet using the ESG when the checked content ID is not the same as a content ID included in the received packet, and to provide the checked content information.

11. A method for providing a broadcasting service in a multimedia broadcasting system including a broadcasting server and a digital broadcasting reception terminal, the method comprising:
a first step of the broadcasting server broadcasting a packet including a broadcasting content ID corresponding to currently broadcast broadcasting content for each broadcasting channel;
a second step of the digital broadcasting reception terminal receiving a packet through a broadcasting channel upon selection of the broadcasting channel; and
a third step of the digital broadcasting reception terminal checking content information corresponding to a content ID included in the received packet using previously stored broadcasting schedule information in order to check received broadcasting content.

12. The method of claim 11, wherein the first step comprises the broadcasting server transmitting the broadcasting content ID corresponding to the currently broadcast broadcasting content for each broadcasting channel through a packet that is different from a multimedia packet for providing broadcasting content for each broadcasting channel.

13. The method of claim 11 or 12, further comprising, prior to the first step, the broadcasting server transmitting reception information regarding a new session for broadcasting the packet including the content ID corresponding to the broadcasting channel through an Electronic Service Guide, ESG.

14. The method of claim 13, wherein the reception information regarding the new session for broadcasting the packet including the content ID corresponding to the broadcasting channel is transmitted through a Session Description Protocol, SDP, file of the ESG.

15. The method of claim 14, further comprising:
the digital broadcasting reception terminal receiving and storing the ESG; and
checking the reception information for receiving the content information corresponding to the selected broadcasting channel through the SDP file, receiving the packet using the checked reception information, and checking the content ID included in the received packet.

16. The method of claim 15, wherein the third step comprises:
the digital broadcasting reception terminal checking a content ID corresponding to the currently selected broadcasting channel using the stored ESG; and
checking whether the checked content ID is identical to the content ID included in the received packet; and
providing the content information corresponding to the broadcasting channel.

17. The method of claim 16, further comprising:
checking the content information corresponding to the content ID included in the received packet using the ESG if the checked content ID is not the same as the content ID included in the received packet and providing the checked content information.

18. The method of claim 11, wherein the first step comprises the broadcasting server transmitting the broadcasting content ID corresponding to the currently broadcast broadcasting content for each broadcasting channel through a multimedia packet.

19. The method of claim 18, wherein the third step comprises:
the digital broadcasting reception terminal checking the content ID corresponding to the broadcasting channel using a previously stored Electronic Service Guide, ESG;
checking if the checked content ID is identical to a content ID included in the received packet; and
providing the content information corresponding to the currently selected broadcasting channel when the checked content ID is identical to a content ID included in the received packet.

20. The method of claim 19, further comprising checking content information corresponding to the content ID included in the received packet using the ESG if the checked content ID is not the same as a content ID included in the received packet and providing the checked content information.

21. A multimedia broadcasting system comprising:
a broadcasting server for broadcasting a broadcasting content ID corresponding to currently broadcast broadcasting content for each broadcasting channel; and
a digital broadcasting reception terminal for, upon selection of broadcasting content for reserved recording, starting packet reception through a broadcasting channel through which the selected broadcasting content is broadcast at a point of time preceding a broadcasting start time of the selected broadcasting content by preset content search time, checking whether a content ID included in a received packet is identical to a content ID corresponding to reserved-recording set broadcasting content, and
recording multimedia data of only a received packet including the same content ID as the content ID corresponding to the reserved-recording set broadcasting content.

22. The multimedia broadcasting system of claim 21, wherein the broadcasting reception terminal comprises:
a memory unit for storing a broadcasting schedule table including information about broadcasting contents provided for each broadcasting channel in units of time, the content search time used to start the packet reception through the broadcasting channel at a point of time preceding the broadcasting start time of the selected broadcasting content by the preset content search time, and recording pause maximum time;
a broadcasting receiver for receiving a packet transmitted through a selected broadcasting channel;
a content ID checking unit for checking a content ID included in a received packet; and
a controller for, upon selection of the broadcasting content for reserved recording, controlling to start the packet reception through the broadcasting receiver at the point of time preceding the broadcasting start time of the selected broadcasting content by the preset content search time and to start recording when the content ID included in the received packet is identical to the content ID corresponding to the reserved-recording set broadcasting content.

23. The multimedia broadcasting system of claim 22, wherein the controller is adapted to continue checking whether a content ID included in a packet received through the broadcasting receiver is identical to the content ID corresponding to the reserved-recording set broadcasting content when the content ID included in the received packet is not identical to the content ID corresponding to the reserved-recording set broadcasting content.

24. The multimedia broadcasting system of claim 22, wherein the controller is adapted to check whether the content ID included in the received packet is identical to the content ID corresponding to the reserved-recording set broadcasting content during recording, to continue recording when the content IDs are identical to each other, and to check whether the content ID included in the received packet exists in the broadcasting schedule table when the content IDs are not identical to each other and then terminates recording when the content ID exists in the broadcasting schedule table.

25. The multimedia broadcasting system of claim 24, wherein when the content ID does not exist in the broadcasting schedule table, the controller is further adapted to pause recording and, in a recording pause state, to check whether the content ID included in the received packet is identical to the content ID corresponding to the reserved-recording set broadcasting content, and to perform successive recording by resuming recording successively from an end of a paused portion when the content IDs are identical to each other.

26. The multimedia broadcasting system of claim 25, wherein in the recording pause state, the controller is further adapted to check whether the content ID included in the received packet is identical to the content ID corresponding to the reserved-recording set broadcasting content and checks whether the content ID included in the received packet exists in the broadcasting schedule table when the content IDs are not identical to each other and to terminate recording when the content ID included in the received packet exists in the broadcasting schedule table.

27. The multimedia broadcasting system of claim 26, wherein in the recording pause state, the controller is further adapted to check whether the content ID included in the received packet exists in the broadcasting schedule table, and to terminate recording when the content ID does not exist in the broadcasting schedule table, the broadcasting end time of the selected broadcasting content is exceeded, and the recording pause maximum time is exceed.

28. A method for reserved-recording broadcasting content by a digital broadcasting reception terminal in a multimedia broadcasting system including a broadcasting server and the digital broadcasting reception terminal, the method comprising:
broadcasting, by the broadcasting server, a packet including a broadcasting content ID corresponding to currently broadcast broadcasting content for each broadcasting channel;
upon selection of broadcasting content for reserved recording by the digital broadcasting reception terminal, starting by the digital broadcasting reception terminal packet reception through a broadcasting channel through which the selected broadcasting content is broadcast at a point of time preceding a broadcasting start time of the selected broadcasting content by a preset content search time; and
analyzing by the digital broadcasting reception terminal a content ID included in a received packet and recording multimedia data of only a received packet including the same content ID as a content ID corresponding to reserved-recording set broadcasting content.

29. The method of claim 28, further comprising the step of storing by the digital broadcasting reception terminal a broadcasting schedule table including information about broadcasting contents provided for each broadcasting channel in units of time, a content search time used to start a packet reception through the broadcasting channel at a point of time preceding the broadcasting start time of the selected broadcasting content by the preset content search time, and recording a pause maximum time.

30. The method of claim 29, wherein recording comprises:
analyzing the content ID included in the received packet;
checking whether the content ID included in the received packet is identical to the content ID corresponding to the reserved-recording set broadcasting content; and
starting recording when the content ID included in the received packet is identical to the content ID corresponding to the reserved-recording set broadcasting content.

31. The method of claim 30, further comprising continuing checking when a content ID included in a received packet is identical to the content ID corresponding to the reserved-recording set broadcasting content when the content ID included in the received packet is not identical to the content ID corresponding to the reserved-recording set broadcasting content.

32. The method of claim 31, further comprising:
checking whether the content ID included in the received packet is identical to the content ID corresponding to the reserved-recording set broadcasting content during recording;
continuing recording when the content ID included in the received packet is identical to the content ID corresponding to the reserved-recording set broadcasting content and checking whether the content ID included in the received packet exists in the broadcasting schedule table when the content ID included in the received packet is not identical to the content ID corresponding to the reserved-recording set broadcasting content; and
terminating recording when the content ID included in the received packet exists in the broadcasting schedule table.

33. The method of claim 32, further comprising:
pausing recording when the content ID included in the received packet does not exist in the broadcasting schedule table;
in a recording pause state, checking whether the content ID included in the received packet is identical to the content ID corresponding to the reserved-recording set broadcasting content; and
performing successive recording by resuming recording successively from an end of a paused portion when the content ID included in the received packet is identical to the content ID corresponding to the reserved-recording set broadcasting content.

34. The method of claim 33, further comprising:
in the recording pause state, checking whether the content ID included in the received packet is identical to the content ID corresponding to the reserved-recording set broadcasting content, and checking whether the content ID included in the received packet exists in the broadcasting schedule table if the content IDs are not identical to each other; and
terminating recording when the content ID included in the received packet exists in the broadcasting schedule table.

35. The method of claim 34, further comprising, in the recording pause state, checking whether the content ID included in the received packet exists in the broadcasting schedule table and terminating recording when the content ID included in the received packet does not exist in the broadcasting schedule table, the broadcasting end time of the reserved-recording set broadcasting content is exceeded, and the recording pause maximum time is exceeded.
